# EUROPEAN PATENT APPLICATION

(11) **EP 4 697 784 A1**
(43) Date of publication of application: **18.02.2026**
(21) Application number: 23932357.9
(22) Date of filing: 10.04.2023
(51) Int. Cl.: H04W 24/08

(54) **SENSING MEASUREMENT METHOD, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/087356
(87) International publication number: WO 2024/212057

(57) **Abstract**

Embodiments of the present disclosure relate to the technical field of mobile communications, and provide a sensing measurement method, an electronic device, and a storage medium. The sensing measurement method is applied to a sensing by proxy (SBP) initiator. The method comprises: determining and sending an SBP request frame, wherein the SBP request frame comprises first identification information, and the first identification information indicates the SBP initiator does not participate in a target sensing measurement process requested to be set up according to the SBP request frame; and receiving a polling frame, the polling frame identifying that the SBP initiator receives an SBP report frame, and the SBP report frame comprising a sensing measurement report of the target sensing measurement process. The embodiments of the present disclosure provide a method for perfecting an SBP mechanism.

## Description

### TECHNICAL FIELD

The embodiments of the present disclosure relate to the technical field of mobile communication, and in particular, to a sensing measurement method, an electronic device, and a storage medium.

### BACKGROUND

Among the currently researched Wi-Fi technologies, wireless local area network (WLAN) sensing technologies may be supported. For instance, this applies to application scenarios such as location discovery, proximity detection, and presence detection in dense environments (e.g., home environments and business environments).

In the procedure of WLAN Sensing, the identities of a station (STA) and an access point (AP) can usually be swapped. For example, both may serve as a sensing initiator or a sensing transmitter. When serving as the sensing initiator or the sensing transmitter, the AP can communicate with multiple STAs simultaneously. However, the STA does not have this capability and can only perform one-to-one communication with a single sensing responder. This situation, on one hand, leads to the waste of spectrum resources, and on the other hand, causes increased latency, which may fail to meet the latency requirements in communication scenarios with high latency requirements. To address this issue, a method where the AP serves as proxy for STAs to perform WLAN sensing measurements is proposed, namely sensing by proxy (SBP). Therefore, further improvements to the SBP mechanism are needed.

### SUMMARY

The embodiments of the present disclosure provide a sensing measurement method, an electronic device, and a storage medium to further improve the SBP mechanism.

In an aspect, an embodiment of the present disclosure provides a sensing measurement method, which is applied to a sensing by proxy (SBP) initiator, and the method includes:
determining and sending an SBP request frame; where the SBP request frame includes first identification information, and the first identification information indicates that the SBP initiator does not participate in a target sensing measurement procedure requested to be set up by the SBP request frame; and
receiving a polling frame, where the polling frame identifies that the SBP initiator receives an SBP report frame, where the SBP report frame includes a sensing measurement report of the target sensing measurement procedure.

In another aspect, an embodiment of the present disclosure further provides a sensing measurement method, which is applied to a sensing by proxy (SBP) responder, and the method includes:
receiving an SBP request frame; where the SBP request frame includes first identification information, and the first identification information indicates that an SBP initiator does not participate in a target sensing measurement procedure requested to be set up by the SBP request frame; and
sending a polling frame, where the polling frame identifies that the SBP initiator receives a sensing measurement report of the target sensing measurement procedure.

In another aspect, an embodiment of the present disclosure further provides an electronic device, which is a sensing by proxy (SBP) initiator, and the electronic device includes:
a determining module, configured to determine and send an SBP request frame; where the SBP request frame includes first identification information, and the first identification information indicates that the SBP initiator does not participate in a target sensing measurement procedure requested to be set up by the SBP request frame; and
a first receiving module, configured to receive a polling frame, where the polling frame identifies that the SBP initiator receives an SBP report frame, where the SBP report frame includes a sensing measurement report of the target sensing measurement procedure.

In another aspect, an embodiment of the present disclosure further provides an electronic device, which is a sensing by proxy (SBP) responder, and the electronic device includes:
a second receiving module, configured to receive an SBP request frame; where the SBP request frame includes first identification information, and the first identification information indicates that an SBP initiator does not participate in a target sensing measurement procedure requested to be set up by the SBP request frame; and
a sending module, configured to send a polling frame, where the polling frame identifies that the SBP initiator receives a sensing measurement report of the target sensing measurement procedure.

An embodiment of the present disclosure further provides an electronic device, including a memory, a processor, and a computer program stored in the memory and executable on the processor, where the processor, when executing the program, implements one or more methods described in the embodiments of the present disclosure.

An embodiment of the present disclosure further provides a computer-readable storage medium having a computer program stored thereon. The computer program, when executed by a processor, implements one or more methods described in the embodiments of the present disclosure.

In the embodiments of the present disclosure, the SBP initiator determines and sends an SBP request frame, and indicates, through first identification information, that the SBP initiator does not participate in the target sensing measurement procedure requested to be set up by the SBP request frame. A polling frame is received, where the polling frame identifies that the SBP initiator receives the sensing measurement report of the target sensing measurement procedure. The embodiments of the present disclosure provide an implementation manner for how an AP wakes up a STA, which serves as the SBP initiator and does not participate in the sensing measurement, to receive the SBP report frame, thereby further improving the SBP mechanism.

Additional aspects and advantages of the embodiments of the present disclosure will be partially provided in the description below, which will become apparent from the description below, or will be learned through the practice of the present disclosure.

### BRIEF DESCRIPTION OF THE DRAWINGS

In order to more clearly illustrate the technical solutions of the embodiments of the present disclosure, the accompanying drawings that are to be used in the description of the embodiments of the present disclosure are briefly introduced below. Obviously, the drawings in the following description are only some embodiments of the present disclosure, and those of ordinary skill in the art may obtain other drawings based on these drawings without paying creative effort.
FIG. 1 is a schematic diagram of an application scenario provided by an embodiment of the present disclosure;
FIG. 2 is a first flow chart of a sensing measurement method provided by an embodiment of the present disclosure;
FIG. 3 is a second flow chart of a sensing measurement method provided by an embodiment of the present disclosure;
FIG. 4 is a first schematic structural diagram of an electronic device provided by an embodiment of the present disclosure;
FIG. 5 is a second schematic structural diagram of an electronic device provided by an embodiment of the present disclosure; and
FIG. 6 is a third schematic structural diagram of an electronic device provided by an embodiment of the present disclosure.

### DETAILED DESCRIPTION

Exemplary embodiments are described in detail herein, examples of which are represented in the accompanying drawings. When the following description relates to the drawings, the same numerals in different accompanying drawings represent the same or similar elements unless otherwise indicated. The implementations described in the following exemplary embodiments do not represent all implementations consistent with the embodiments of the present disclosure. To the contrary, they are merely examples of apparatuses and methods that are consistent with some aspects of the embodiments of the present disclosure.

Terms used in the embodiments of the present disclosure are used solely for the purpose of describing certain embodiments and are not intended to limit the embodiments of the present disclosure. The singular forms of "a/an", "said" and "the" used in the embodiments of the present disclosure are also intended to include plural forms unless the context clearly indicates other meanings. It should also be understood that the term "and/or" used herein refers to and includes any or all possible combinations of one or more associated listed items. For example, A and/or B can represent: A exists alone, A and B exist at the same time, and B exists alone. The character "/" generally indicates that the objects associated before and after are in an "or" relationship. The term "plurality" refers to two or more. In view of this, the term "plurality" can also be understood as "at least two" in the embodiments of the present disclosure.

It should be understood that although the terms first, second, third, etc. may be used to describe various information in the embodiments of the present disclosure, and such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word as used herein may be interpreted as "when..." or "while..." or "in response to determination".

The technical solutions in the embodiments of the present disclosure are clearly and completely described below with reference to the accompanying drawings in the embodiments of the present disclosure. Obviously, the described embodiments are only a part of the embodiments of the present disclosure, and not all of them. Based on the embodiments in the present disclosure, all other embodiments obtained by those of ordinary skill in the art without making creative efforts shall fall within the protection scope of the present disclosure.

The embodiments of the present disclosure provide a sensing measurement method, an electronic device, and a storage medium to further improve the SBP mechanism.

The method and the apparatus are based on the same application concept. Since the principles of the method and the apparatus for solving problems are similar, the implementations of the apparatus and the method may refer to each other, and the repeated parts will not be described again.

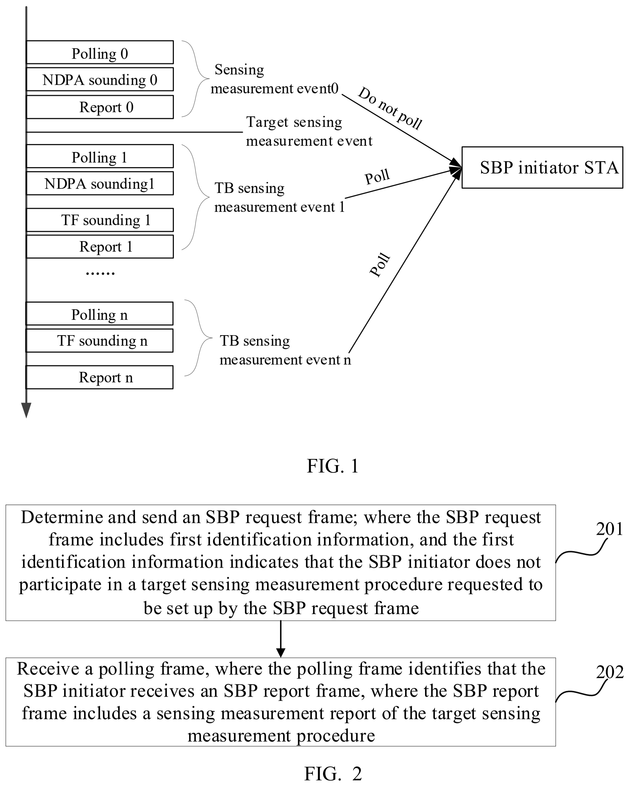

Reference is made to FIG. 1, which illustrates a schematic diagram of an application scenario of the sensing measurement method provided by an embodiment of the present disclosure. Optionally, the SBP initiator may be a station (STA). The STA, for example, an electronic device with wireless network access functionality, provides a frame delivery service to enable information transmission. The SBP responder may be an access point (AP). An AP is, for example, a device with wireless-to-wired bridging functionality, and is responsible for extending the services provided by the wired network to the wireless network.

Reference is made to FIG. 1, which illustrates part of sensing measurement instances (TB sensing measurement instance 1 to sensing measurement instance n) of a target sensing measurement procedure. The target sensing measurement procedure refers to the TB sensing measurement procedure setup by the SBP responder in response to an SBP request frame after the SBP request frame is sent.

In addition, FIG. 1 also includes the sensing measurement instance before the target sensing measurement procedure (TB sensing measurement instance 0).

Each TB sensing measurement instance (TB sensing measurement instance 0 to sensing measurement instance n) includes a polling phase, a sounding phase, and a reporting phase. Within each TB sensing measurement instance, the sounding may include only one of null data packet announcement (NDPA) sounding or trigger frame (TF) sounding, or may include both (e.g., hybrid sounding). Taking the NDPA sounding as an example, the AP first sends an NDPA frame, and then sends a null data packet announcement (NDP) frame. In TF sounding, the AP first sends a TF trigger frame and then receives an NDP frame from the sensing responder (STA). The NDP frame occupies the entire bandwidth.

Before TB sensing measurement instance 1, the SBP initiator sends an SBP request frame to the SBP responder, and carries first identification information in the SBP request frame, indicating through the first identification information that the SBP initiator does not participate in the target sensing measurement procedure requested to be setup by the SBP request frame.

Therefore, as shown in FIG. 1, the sensing measurement report for TB sensing measurement instance 0 (Report 0 in FIG. 1) is the measurement result of the previous sensing measurement instance of the target sensing measurement procedure. That is, this measurement result corresponds to the previous measurement instance of the target sensing measurement procedure. However, Report 0 may be sent after the SBP initiator sends the SBP request frame to the SBP responder. Therefore, during the polling phase corresponding to Report 0, i.e., Polling 0, the SBP initiator may not be polled to save the device power of the SBP initiator. Correspondingly, the SBP initiator may not receive the polling frame of Polling 1.

However, in the polling phase after the sounding phase of TB sensing measurement instance 1, the AP needs to poll the SBP initiator. For example, if the sensing measurement result is the sensing measurement result of the current sensing measurement instance, the AP needs to poll the SBP initiator in the polling phase, that is, from Polling 1 to Polling n, the SBP initiator needs to receive polling frames.

In addition, during the SBP procedure, even if the SBP initiator does not participate in the target sensing measurement procedure, in order to identify the identity information of the SBP initiator or facilitate the AP to manage the SBP initiator, the SBP initiator still needs to determine the USID assigned by the SBP responder to the SBP initiator.

Referring to FIG. 2, an embodiment of the present disclosure provides a sensing measurement method, which may be applied to a proxy sensing SBP initiator. The method may include the following steps.

In step 201, an SBP request frame is determined and sent; where the SBP request frame includes first identification information, and the first identification information indicates that the SBP initiator does not participate in a target sensing measurement procedure requested to be set up by the SBP request frame.

During the SBP procedure, the SBP initiator may serve as a sensing responder to participate in the subsequent triggered based sounding (TB) sensing measurement initiated by the SBP responder (AP), or choose not to participate.

The SBP initiator determines and sends an SBP request frame, which carries first identification information. The first identification information indicates that the SBP initiator does not participate in the target sensing measurement procedure requested to be set up by the SBP request frame. The target sensing measurement procedure is the TB sensing measurement procedure set up by the SBP responder in response to the SBP request frame after the SBP request frame is sent.

In step 202, a polling frame is received, where the polling frame identifies that the SBP initiator receives an SBP report frame, where the SBP report frame includes a sensing measurement report of the target sensing measurement procedure.

After the SBP initiator sends the SBP request frame, the SBP responder set up the TB sensing measurement procedure. The TB sensing measurement setup procedure may include one or more TB sensing measurement instances. Generally, each TB sensing measurement instance includes a polling phase, a sounding phase, and a report phase. In each TB sensing measurement instance, the sounding may include only one of null data packet announcement (NDPA) sounding or trigger frame (TF) sounding, or may include the both (e.g., hybrid sounding).

After the polling phase, the SBP initiator needs to receive the sensing measurement report sent by the SBP responder, that is, the measurement report of the TB sensing measurement procedure. Therefore, after the SBP initiator sends the SBP request frame, the SBP initiator receives the polling frame, and the polling frame identifies that the SBP initiator receives the SBP report frame, and the SBP report frame is the sensing measurement report of the target sensing measurement procedure. For example, after the SBP initiator sends the SBP request frame, it enters the power saving state, and the SBP initiator needs to be woken up via a polling frame to facilitate receiving the SBP report frame.

In addition, during the TB sensing measurement procedure, the sensing measurement report may be the measurement result of the previous sensing measurement instance or the measurement result of the current sensing measurement instance. If the measurement result corresponds to the previous measurement instance, that is, the sensing measurement instance before the target sensing measurement procedure, then before the first TB sensing measurement instance (such as NDPA sounding) of the target sensing measurement procedure occurs, the AP may not poll the SBP initiator in the polling phase to ensure that the STA saves power, that is, the SBP initiator may not receive the polling frame.

However, in the polling phase of the following sensing measurement instances, the AP needs to poll the SBP initiator. For example, if the sensing measurement result is the sensing measurement result of the current sensing measurement instance, the AP needs to poll the SBP initiator in the polling phase.

In the embodiments of the present disclosure, the SBP initiator determines and sends an SBP request frame, and indicates, through first identification information, that the SBP initiator does not participate in the target sensing measurement procedure requested to be set up by the SBP request frame. A polling frame is received, where the polling frame identifies that the SBP initiator receives the sensing measurement report of the target sensing measurement procedure. The embodiments of the present disclosure provide an implementation manner for how an AP wakes up a STA, which serves as the SBP initiator and does not participate in the sensing measurement, to receive the SBP report frame, thereby further improving the SBP mechanism.

An embodiment of the present disclosure provides a sensing measurement method. Optionally, the method may be applied to a sensing by proxy (SBP) initiator. The method includes:

determining and sending an SBP request frame; where the SBP request frame includes first identification information, and the first identification information indicates that the SBP initiator does not participate in a target sensing measurement procedure requested to be set up by the SBP request frame.

Before the first sensing measurement instance of the target sensing measurement procedure occurs, no polling frame is received. That is, the measurement result corresponds to the previous measurement instance, i.e., the sensing measurement instance before the target sensing measurement procedure. Then, before the first TB sensing measurement instance (such as NDPA sounding) of the target sensing measurement procedure occurs, the AP may not poll the SBP initiator in the polling phase to ensure that the STA saves power, that is, the SBP initiator may not receive the polling frame.

Optionally, in the embodiments of the present disclosure, the sensing measurement instance of the target sensing measurement procedure includes a TF sounding procedure and/or an NDPA sounding procedure.

That is, the sounding phase may include only one of the TF sounding procedure or the NDPA sounding procedure, or may include both at the same time, e.g., a hybrid sounding. In the above detection procedure, if the measurement report sent by the SBP is before the occurrence of first TB sensing measurement instance of the target sensing measurement procedure, the SBP initiator may not be polled; if the first TB sensing measurement instance has begun, the SBP initiator has to be polled.

Optionally, in the embodiments of the present disclosure, the first identification information includes a sensing responder identification bit of an SBP parameter control field of the SBP request frame. As an example, the SBP parameter control field is shown in the following Table 1:

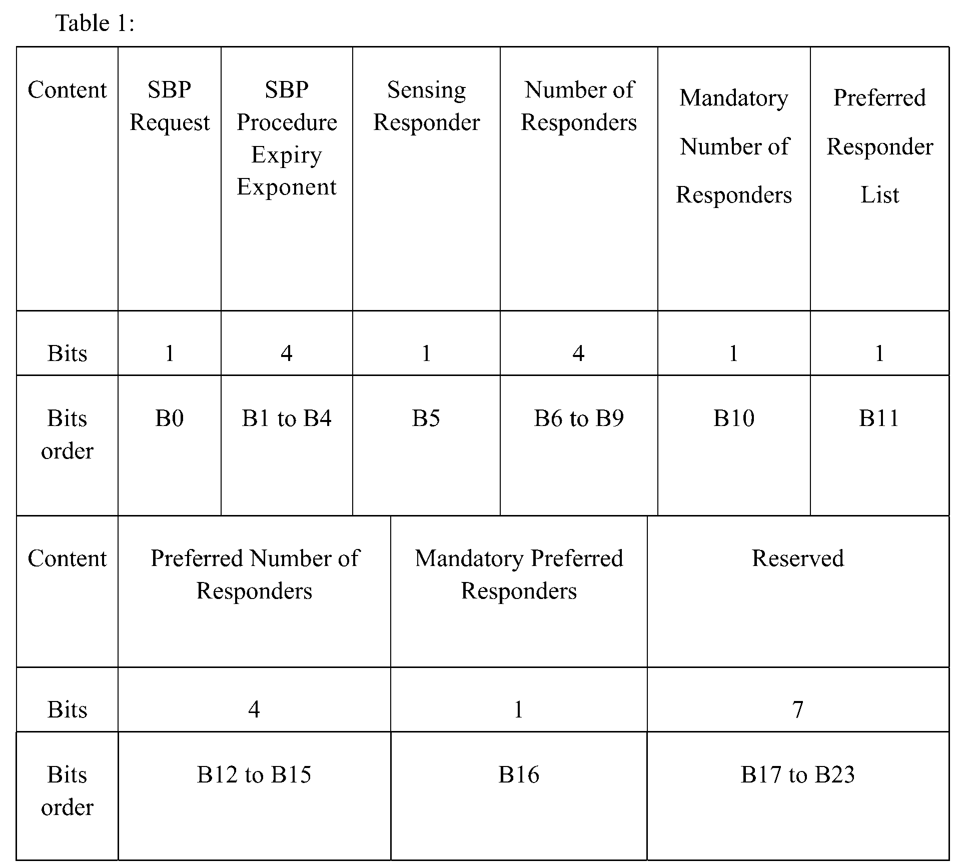

The sensing responder identification bit may be set to "0" to indicate that the SBP initiator does not participate in the target sensing measurement procedure requested to be set up by the SBP request frame.

Optionally, in the embodiments of the present disclosure, the method further includes:
determining a USID assigned by the SBP responder to the SBP initiator.

In the SBP procedure, even if the SBP initiator does not participate in the target sensing measurement procedure, in order to identify the identity information of the SBP initiator or facilitate the AP to manage the SBP initiator, the SBP initiator still needs to determine the USID assigned by the SBP responder to the SBP initiator.

Optionally, in the embodiments of the present disclosure, the determination of the USID assigned by the SBP responder to the SBP initiator includes case 1 or case 2.

In case 1, during the SBP setup procedure corresponding to the SBP request frame, the USID assigned by the SBP responder to the SBP initiator is received. Even if the SBP initiator does not participate in the target sensing measurement procedure, the AP (SBP responder) still assign a user identifier (User ID, USID) to the SBP initiator during the SBP setup procedure.

In case 2, the USID assigned by the SBP responder to the SBP initiator is obtained during the SBP setup procedure or the TB sensing measurement procedure before the SBP request frame is sent.

In the sensing measurement procedure before the target sensing measurement procedure (such as other SBP sensing measurement procedures or other TB sensing measurement procedures), the AP assigns a USID to the SBP initiator. In the target sensing measurement procedure, the SBP initiator may use the previously assigned USID.

An embodiment of the present disclosure provides a sensing measurement method. Optionally, the method may be applied to a sensing by proxy (SBP) initiator. The method includes:
determining and sending an SBP request frame; where the SBP request frame includes first identification information, and the first identification information indicates that the SBP initiator does not participate in a target sensing measurement process requested to be set up by the SBP request frame; and
receiving a polling frame, where the polling frame identifies that the SBP initiator receives an SBP report frame, where the SBP report frame includes a sensing measurement report of the target sensing measurement process.

Optionally, after sending the SBP request frame, the method further includes:
not receiving the polling frame before a first sensing measurement instance of the target sensing measurement process occurs.

Optionally, the sensing measurement instance of the target sensing measurement procedure includes a TF sounding procedure and/or an NDPA sounding procedure.

Optionally, the first identification information includes a sensing responder identification bit of an SBP parameter control field of the SBP request frame.

Optionally, the method further includes:
determining a USID assigned by an SBP responder to the SBP initiator.

Optionally, determining the USID assigned by the SBP responder to the SBP initiator includes:
receiving the USID assigned by the SBP responder to the SBP initiator during an SBP setup procedure corresponding to the SBP request frame;
   or
obtaining the USID assigned by the SBP responder to the SBP initiator during an SBP setup procedure or a TB sensing measurement procedure before the SBP request frame is sent.

In the embodiments of the present disclosure, the SBP initiator determines and sends an SBP request frame, and indicates, through first identification information, that the SBP initiator does not participate in the target sensing measurement procedure requested to be set up by the SBP request frame. A polling frame is received, where the polling frame identifies that the SBP initiator receives the sensing measurement report of the target sensing measurement procedure. The embodiments of the present disclosure provide an implementation manner for how an AP wakes up a STA, which serves as the SBP initiator and does not participate in the sensing measurement, to receive the SBP report frame, thereby further improving the SBP mechanism.

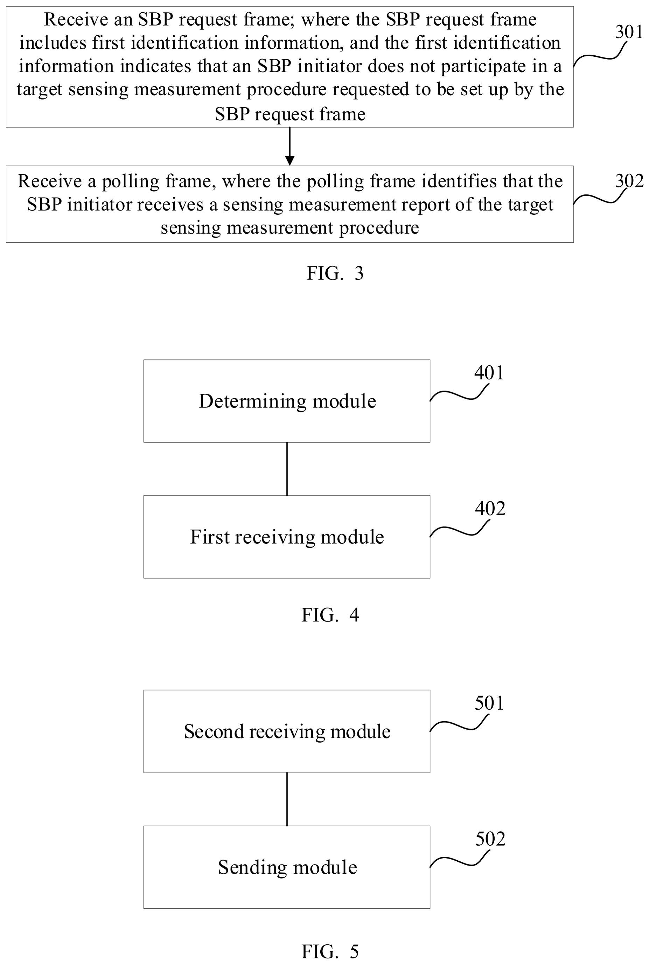

Referring to FIG. 3, an embodiment of the present disclosure provides a sensing measurement method. Optionally, the method may be applied to a sensing by proxy (SBP) responder, which may be an access point (AP) device. The method may include the following steps.

In step 301, an SBP request frame is received; where the SBP request frame includes first identification information, and the first identification information indicates that an SBP initiator does not participate in a target sensing measurement procedure requested to be set up by the SBP request frame.

During the SBP procedure, the SBP initiator may serve as a sensing responder to participate in the subsequent TB sensing measurement initiated by the SBP responder (AP), or not to participate.

The SBP responder receives the SBP request frame and obtains the first identification information carried in the SBP request frame, where the first identification information indicates that the SBP initiator does not participate in the target sensing measurement procedure requested to be set up by the SBP request frame. The target sensing measurement procedure is the TB sensing measurement procedure set up by the SBP responder in response to the SBP request frame after the SBP request frame is sent.

In step 302, a polling frame is sent, where the polling frame identifies that the SBP initiator receives a sensing measurement report of the target sensing measurement procedure.

The SBP responder set up the TB sensing measurement procedure. The TB sensing measurement setup procedure may include one or more TB sensing measurement instances. Generally, each TB sensing measurement instance includes a polling phase, a sounding phase, and a report phase. In each TB sensing measurement instance, the sounding may include only one of NDPA sounding or TF sounding, or may include the both (e.g., hybrid sounding).

After the polling phase, the SBP initiator needs to receive the sensing measurement report sent by the SBP end, that is, the measurement report of the TB sensing measurement procedure. Therefore, after the SBP initiator sends the SBP request frame, the SBP responder sends a polling frame, and indicates, through the polling frame, the SBP initiator to receive the SBP report frame, and the SBP report frame is the sensing measurement report of the target sensing measurement procedure. For example, after the SBP initiator sends the SBP request frame, it enters the power saving state, and the SBP initiator needs to be woken up via a polling frame to facilitate receiving the SBP report frame.

In addition, during the TB sensing measurement procedure, the sensing measurement report may be the measurement result of the previous sensing measurement instance or the measurement result of the current sensing measurement instance. If the measurement result corresponds to the previous measurement instance, that is, the sensing measurement instance before the target sensing measurement procedure, then before the first TB sensing measurement instance (such as NDPA sounding) of the target sensing measurement procedure occurs, the AP may not poll the SBP initiator in the polling phase to ensure that the STA saves power, that is, the SBP initiator may not receive the polling frame.

However, in the polling phase of the following sensing measurement instances, the AP needs to poll the SBP initiator. For example, if the sensing measurement result is the sensing measurement result of the current sensing measurement instance, the AP needs to poll the SBP initiator in the polling phase.

In the embodiments of the present disclosure, the SBP responder receives an SBP request frame, obtains first identification information carried in the SBP request frame, where the first identification information indicates that the SBP initiator does not participate in the target sensing measurement procedure requested to be set up by the SBP request frame; and sends a polling frame, where the polling frame identifies that the SBP initiator receives a sensing measurement report of the target sensing measurement procedure. The embodiments of the present disclosure provide an implementation manner for how an AP wakes up a STA, which serves as the SBP initiator and does not participate in the sensing measurement, to receive the SBP report frame, thereby further improving the SBP mechanism.

Optionally, in the embodiments of the present disclosure, the sensing measurement instance of the target sensing measurement procedure includes a TF sounding procedure and/or an NDPA sounding procedure.

That is, the sounding phase may include only one of the TF sounding procedure or the NDPA sounding procedure, or may include both at the same time, e.g., a hybrid sounding. In the above detection procedure, if the measurement report sent by the SBP is before the occurrence of first TB sensing measurement instance of the target sensing measurement procedure, the SBP initiator may not be polled; if the first TB sensing measurement instance has begun, the SBP initiator has to be polled.

Optionally, in the embodiments of the present disclosure, the first identification information includes a sensing responder identification bit of an SBP parameter control field of the SBP request frame. As an example, the SBP parameter control field is shown in the following Table 1:

**Table 1:**

| Content | SBP Request | SBP Procedure Expiry Exponent | Sensing Responder | | Number of Responders | Mandatory Number of Responders | Preferred Responder List |
|---|---|---|---|---|---|---|---|
| Bits | 1 | 4 | 1 | | 4 | 1 | 1 |
| Bits order | B0 | B1 to B4 | B5 | | B6 to B9 | B10 | B11 |

| Content | Preferred Number of Responders | | | Mandatory Preferred Responders | | Reserved | |
|---|---|---|---|---|---|---|---|
| Bits | 4 | | | 1 | | 7 | |
| Bits order | B12 to B15 | | | B16 | | B17 to B23 | |

The sensing responder identification bit may be set to "0" to indicate that the SBP initiator does not participate in the target sensing measurement procedure requested to be set up by the SBP request frame.

Optionally, in the embodiments of the present disclosure, the method further includes:
assigning a USID to the SBP initiator.

In the SBP procedure, even if the SBP initiator does not participate in the target sensing measurement procedure, in order to identify the identity information of the SBP initiator or facilitate the AP to manage the SBP initiator, the AP still needs to assign a USID to the SBP initiator.

Optionally, in the embodiments of the present disclosure, the assignment of the USID to the SBP initiator includes case 3 or case 4.

In case 3, the USID is assigned to the SBP initiator during the SBP setup procedure corresponding to the SBP request frame.

Even if the SBP initiator does not participate in the target sensing measurement procedure, the AP (SBP responder) still assign a user identifier (User ID, USID) to the SBP initiator during the SBP setup procedure.

In case 4, the USID is assigned to the SBP initiator during the SBP setup procedure or the TB sensing measurement procedure before the SBP request frame is sent.

In the sensing measurement procedure before the target sensing measurement procedure (such as other SBP sensing measurement procedures or other TB sensing measurement procedures), the AP assigns a USID to the SBP initiator. In the target sensing measurement procedure, the SBP initiator may use the previously assigned USID.

An embodiment of the present disclosure provides a sensing measurement method. Optionally, the method may be applied to a sensing by proxy (SBP) responder, which may be an access point (AP). The method may include the following steps:
receiving an SBP request frame; where the SBP request frame includes first identification information, and the first identification information indicates that an SBP initiator does not participate in a target sensing measurement procedure requested to be set up by the SBP request frame; and
sending a polling frame, where the polling frame identifies that the SBP initiator receives a sensing measurement report of the target sensing measurement procedure.

Optionally, a sensing measurement instance of the target sensing measurement procedure includes a TF sounding procedure and/or an NDPA sounding procedure.

Optionally, the first identification information includes a sensing responder identification bit of an SBP parameter control field of the SBP request frame.

Optionally, the method further includes:
assigning a USID to the SBP initiator.

Optionally, assigning the USID to the SBP initiator includes:
assigning the USID to the SBP initiator during an SBP setup procedure corresponding to the SBP request frame;
   or
assigning the USID to the SBP initiator during an SBP setup procedure or a TB sensing measurement procedure before the SBP request frame is sent.

In the embodiments of the present disclosure, the SBP responder receives an SBP request frame, obtains first identification information carried in the SBP request frame, where the first identification information indicates that the SBP initiator does not participate in the target sensing measurement procedure requested to be set up by the SBP request frame; and sends a polling frame, where the polling frame identifies that the SBP initiator receives a sensing measurement report of the target sensing measurement procedure. The embodiments of the present disclosure provide an implementation manner for how an AP wakes up a STA, which serves as the SBP initiator and does not participate in the sensing measurement, to receive the SBP report frame, thereby further improving the SBP mechanism.

Referring to FIG. 4, based on the same principle as the method provided in the embodiment of the present disclosure, an embodiment of the present disclosure further provides an electronic device, the electronic device is a sensing by proxy (SBP) initiator, and the electronic device includes:
a determining module 401, configured to determine and send an SBP request frame; where the SBP request frame includes first identification information, and the first identification information indicates that the SBP initiator does not participate in a target sensing measurement procedure requested to be set up by the SBP request frame; and
a first receiving module 402, configured to receive a polling frame, where the polling frame identifies that the SBP initiator receives an SBP report frame, where the SBP report frame includes a sensing measurement report of the target sensing measurement procedure.

An embodiment of the present disclosure further provides a sensing measurement apparatus, which is applied to a sensing by proxy (SBP) initiator. The apparatus includes:
a request determination module, configured to determine and send an SBP request frame; where the SBP request frame includes first identification information, and the first identification information indicates that the SBP initiator does not participate in a target sensing measurement procedure requested to be set up by the SBP request frame; and
a first polling receiving module, configured to receive a polling frame, where the polling frame identifies that the SBP initiator receives an SBP report frame, where the SBP report frame includes a sensing measurement report of the target sensing measurement procedure.

The apparatus further includes other modules of the electronic device in the aforementioned embodiment, which will not be described in detail here.

Referring to FIG. 5, based on the same principle as the method provided in the embodiment of the present disclosure, an embodiment of the present disclosure further provides an electronic device, the electronic device is a sensing by proxy (SBP) responder, and the electronic device includes:
a second receiving module 501, configured to receive an SBP request frame; where the SBP request frame includes first identification information, and the first identification information indicates that an SBP initiator does not participate in a target sensing measurement procedure requested to be set up by the SBP request frame; and
a sending module 502, configured to send a polling frame, where the polling frame identifies that the SBP initiator receives a sensing measurement report of the target sensing measurement procedure.

An embodiment of the present disclosure further provides a sensing measurement apparatus, which is applied to a sensing by proxy (SBP) responder. The apparatus includes:
a second request receiving module, configured to receive an SBP request frame; where the SBP request frame includes first identification information, and the first identification information indicates that an SBP initiator does not participate in a target sensing measurement procedure requested to be set up by the SBP request frame; and
a polling sending module, configured to send a polling frame, where the polling frame identifies that the SBP initiator receives a sensing measurement report of the target sensing measurement procedure.

The apparatus further includes other modules of the electronic device in the aforementioned embodiment, which will not be described in detail here.

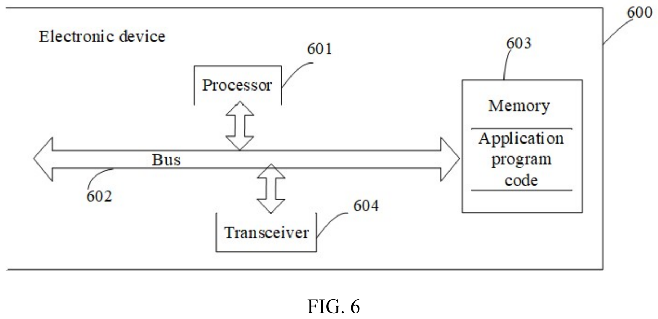

In an optional embodiment, an embodiment of the present disclosure further provides an electronic device. As shown in FIG. 6, the electronic device 600 shown in FIG. 6 may be a server, including: a processor 601 and a memory 603. The processor 601 is connected to the memory 603, for example, via a bus 602. Optionally, the electronic device 600 may further include a transceiver 604. It should be noted that, in practical applications, the number of transceivers 604 is not limited to one, and the structure of the electronic device 600 does not constitute a limitation on the embodiments of the present disclosure.

The processor 601 may be a central processing unit (CPU), a general-purpose processor, a digital signal processor (DSP), an application specific integrated circuit (ASIC), a field programmable gate array (FPGA), or other programmable logic devices, transistor logic devices, hardware components, or any combination thereof. It can implement or execute various exemplary logical blocks, modules, and circuits described with reference to the disclosure of the present disclosure. The processor 601 may also be a combination that implements computing functions, such as a combination including one or more microprocessors, a combination of a DSP and a microprocessor, etc.

The bus 602 may include a path for transmitting information between the above components. The bus 602 may be a peripheral component interconnect (PCI) bus or an extended industry standard architecture (EISA) bus, or the like. The bus 602 may be divided into an address bus, a data bus, a control bus, etc. For ease of representation, only one thick line is used in FIG. 6 for indicating the bus, but it does not indicate that there is only one bus or only one type of bus.

The memory 603 may be a read only memory (ROM) or other types of static storage devices that may store static information and instructions, a random access memory (RAM) or other types of dynamic storage devices that may store information and instructions, or an electrically erasable programmable read only memory (EEPROM), a compact disc read only memory (CD-ROM) or other optical disk storage, optical disc storage (including compact optical disc, laser disc, optical disc, digital versatile optical disc, Blu-ray disc, etc.), a magnetic disk storage medium or other magnetic storage device, or any other medium that may be used to carry or store desired program code in the form of instructions or data structures and may be accessed by a computer, but is not limited thereto.

The memory 603 is used to store the application program code for executing the solutions of the present disclosure, and the execution is controlled by the processor 601. The processor 601 is configured to execute the application program code stored in the memory 603, so as to implement the contents shown in the foregoing method embodiments.

The electronic device includes, but is not limited to: a mobile terminal such as a mobile phone, a laptop computer, a digital broadcast receiver, a personal digital assistant (PDA), a tablet computer (PAD), a portable multimedia player (PMP), a vehicle-mounted terminal (e.g., a vehicle-mounted navigation terminal), etc., as well a fixed terminal such as a digital TV, a desktop computer, and the like. The electronic device shown in FIG. 6 is merely an example and should not impose any limitation on the functions and scope of use of the embodiments of the present disclosure.

The server provided in the present disclosure may be an independent physical server, a server cluster or a distributed system composed of multiple physical servers, or a cloud server that provides basic cloud computing services such as cloud services, cloud databases, cloud computing, cloud functions, cloud storage, network services, cloud communications, middleware services, domain name services, security services, CDN, as well as big data and artificial intelligence platforms. The terminal may be a smart phone, a tablet computer, a notebook computer, a desktop computer, a smart speaker, a smart watch, etc., but is not limited thereto. The terminal and the server can be connected directly or indirectly through wired or wireless communication methods, which is not limited in the present disclosure.

An embodiment of the present disclosure provides a computer-readable storage medium on which a computer program is stored, the computer program, when being run on a computer, causes the computer to execute the corresponding contents in the above method embodiments.

It should be understood that, although the steps in the flowcharts of the accompanying drawings are shown in sequence as indicated by the arrows, these steps are not necessarily performed sequentially in the order as indicated by the arrows. There is no strict restriction on the performing order of these steps, and they may be performed in other orders, unless otherwise stated herein. Moreover, at least a part of the steps in the flowcharts of the accompanying drawings may include multiple sub-steps or multiple stages, and these sub-steps or stages are not necessarily completed at the same time, but may be performed at different times, and the performing order thereof is not necessarily sequential, but may be performed in turn or alternately with other steps or at least a part of the sub-steps or stages of other steps.

It should be noted that the computer-readable medium mentioned above in the present disclosure may be a computer-readable signal medium or a computer-readable storage medium or any combination of the two. The computer-readable storage medium may be, for example, but is not limited to, an electrical, magnetic, optical, electromagnetic, infrared, or semiconductor system, apparatus or device, or any combination of the above. More specific examples of the computer-readable storage medium may include, but is not limited to, an electrical connection with one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium containing or storing a program that may be used by or in combination with an instruction execution system, apparatus or device. In the present disclosure, the computer-readable signal medium may include a data signal propagated in a baseband or as part of a carrier wave, which carries computer-readable program code. The propagated data signal may take a variety of forms, including but not limited to electromagnetic signals, optical signals, or any suitable combination of the above. The computer readable signal medium may also be any computer readable medium other than the computer readable storage medium, which may send, propagate or transmit a program for use by or in conjunction with an instruction execution system, apparatus or device. The program code contained on the computer readable medium may be transmitted using any appropriate medium, including but not limited to: wires, optical cables, RF (radio frequency), etc., or any suitable combination of the above.

The aforementioned computer-readable medium may be included in the above-mentioned electronic device; alternatively, it may exist independently without being assembled into the electronic device.

The computer-readable medium carries one or more programs. The one or more programs, when executed by the electronic device, cause the electronic device to execute the method shown in the above embodiments.

According to an aspect of the present disclosure, a computer program product or a computer program is provided, the computer program product or the computer program includes computer instructions, and the computer instructions are stored in a computer-readable storage medium. A processor of a computer device reads the computer instructions from the computer-readable storage medium, and the processor executes the computer instructions, to cause the computer device to perform the methods provided in the above various optional implementations.

The computer program code for performing the operations of the present disclosure may be written in one or more programming languages, or a combination thereof, including object-oriented programming languages, such as Java, Smalltalk, C++, and conventional procedural programming languages, such as "C" language or similar programming languages. The program code may be executed entirely on the user's computer, partially executed on the user's computer, executed as a separate software package, executed partially on the user's computer and partially on a remote computer, or executed entirely on a remote computer or server. In the cases involving a remote computer, the remote computer may be connected to the user's computer through any type of network, including a local area network (LAN) or a wide area network (WAN), or may be connected to an external computer (e.g., via Internet using an Internet service provider).

The flow charts and block diagrams in the accompanying drawings illustrate the possible architectures, functions and operations of the system, method and computer program product according to various embodiments of the present disclosure. In this regard, each of the blocks in the flow charts or block diagrams may represent a module, a program segment or part of code, and the module, the program segment or the part of code contains one or more executable instructions for realizing the specified logical functions. It should also be noted that in some alternative implementations, the functions marked in the blocks may also occur in a sequence different from that marked in the accompanying drawings. For example, two blocks shown in succession may actually be executed substantially in parallel, or they may sometimes be executed in the opposite order, depending on the functions involved. It should also be noted that each block in the block diagrams and/or flow charts, and the combination of the blocks in the block diagrams and/or flow charts may be implemented with a dedicated hardware-based system that performs a specified function or operation, or may be implemented with a combination of dedicated hardware and computer instructions.

The modules involved in the embodiments described in the present disclosure may be implemented in software or in hardware. The names of the modules do not make limitation on the modules themselves in some cases. For example, a module A may also be described as "a module A for performing operation B".

Those described above are only explanations of preferred embodiments of the present disclosure and the technical principles employed. Those skilled in the art should understand that the scope of disclosure involved in the present disclosure is not limited to the technical solutions formed by the above specific combination of the technical features, but should also cover other technical solutions formed by any combination of the above technical features or their equivalent features without departing from the above disclosed concept, for example, a technical solution formed by replacing the above features with the technical features with similar functions disclosed in the present disclosure (but not limited thereto).

## Claims

1. A sensing measurement method, applied to a sensing by proxy (SBP) initiator, comprising:
determining and sending an SBP request frame; wherein the SBP request frame comprises first identification information, and the first identification information indicates that the SBP initiator does not participate in a target sensing measurement procedure requested to be set up by the SBP request frame; and
receiving a polling frame, wherein the polling frame identifies that the SBP initiator receives an SBP report frame, wherein the SBP report frame comprises a sensing measurement report of the target sensing measurement procedure.

2. The sensing measurement method according to claim 1, wherein after sending the SBP request frame, the method further comprises:
not receiving the polling frame before a first sensing measurement instance of the target sensing measurement procedure occurs.

3. The sensing measurement method according to claim 1 or 2, wherein a sensing measurement instance of the target sensing measurement procedure comprises a TF sounding procedure and/or an NDPA sounding procedure.

4. The sensing measurement method according to claim 1, wherein the first identification information comprises a sensing responder identification bit of an SBP parameter control field of the SBP request frame.

5. The sensing measurement method according to any one of claims 1 to 4, further comprising:
determining a USID assigned by an SBP responder to the SBP initiator.

6. The sensing measurement method according to claim 5, wherein determining the USID assigned by the SBP responder to the SBP initiator comprises:
receiving the USID assigned by the SBP responder to the SBP initiator during an SBP setup procedure corresponding to the SBP request frame; or
obtaining the USID assigned by the SBP responder to the SBP initiator during an SBP setup procedure or a TB sensing measurement procedure before the SBP request frame is sent.

7. A sensing measurement method, applied to a sensing by proxy (SBP) responder, comprising:
receiving an SBP request frame; wherein the SBP request frame comprises first identification information, and the first identification information indicates that an SBP initiator does not participate in a target sensing measurement procedure requested to be set up by the SBP request frame; and
sending a polling frame, wherein the polling frame identifies that the SBP initiator receives a sensing measurement report of the target sensing measurement procedure.

8. The sensing measurement method according to claim 7, wherein a sensing measurement instance of the target sensing measurement procedure comprises a TF sounding procedure and/or an NDPA sounding procedure.

9. The sensing measurement method according to claim 7, wherein the first identification information comprises a sensing responder identification bit of an SBP parameter control field of the SBP request frame.

10. The sensing measurement method according to any one of claims 7 to 9, further comprising:
assigning a USID to the SBP initiator.

11. The sensing measurement method according to claim 10, wherein assigning the USID to the SBP initiator comprises:
assigning the USID to the SBP initiator during an SBP setup procedure corresponding to the SBP request frame; or
assigning the USID to the SBP initiator during an SBP setup procedure or a TB sensing measurement procedure before the SBP request frame is sent.

12. An electronic device, wherein the electronic device is a sensing by proxy (SBP) initiator, comprising:
a determining module, configured to determine and send an SBP request frame; wherein the SBP request frame comprises first identification information, and the first identification information indicates that the SBP initiator does not participate in a target sensing measurement procedure requested to be set up by the SBP request frame; and
a first receiving module, configured to receive a polling frame, wherein the polling frame identifies that the SBP initiator receives an SBP report frame, wherein the SBP report frame comprises a sensing measurement report of the target sensing measurement procedure.

13. An electronic device, wherein the electronic device is a sensing by proxy (SBP) responder, comprising:
a second receiving module, configured to receive an SBP request frame; wherein the SBP request frame comprises first identification information, and the first identification information indicates that an SBP initiator does not participate in a target sensing measurement procedure requested to be set up by the SBP request frame; and
a sending module, configured to send a polling frame, wherein the polling frame identifies that the SBP initiator receives a sensing measurement report of the target sensing measurement procedure.

14. An electronic device, comprising a memory, a processor, and a computer program stored in the memory and executable on the processor, wherein the processor, when executing the program, implements the method according to any one of claims 1 to 6 or the method according to any one of claims 7 to 11.

15. A computer-readable storage medium, wherein the computer-readable storage medium stores a computer program, and the computer program, when executed by a processor, implements the method according to any one of claims 1 to 6 or the method according to any one of claims 7 to 11.
